# EUROPÄISCHE PATENTSCHRIFT

(11) **EP 3 174 767 B1**
(45) Veröffentlichungstag und Bekanntmachung des Hinweises auf die Patenterteilung: **23.09.2020**
(21) Anmeldenummer: 15727306.1
(22) Anmeldetag: 22.05.2015
(51) Int. Cl.: B60T 8/17, B60T 8/1755

(54) **VERFAHREN UND BREMS-STEUEREINRICHTUNG ZUR STABILISIERUNG EINER FAHRZEUG-KOMBINATION**
METHOD AND BRAKING CONTROL DEVICE FOR STABILISING A VEHICLE COMBINATION
PROCÉDÉ ET DISPOSITIF DE COMMANDE DE FREINAGE SERVANT À STABILISER UN VÉHICULE COMBINÉ

(30) Priorität: 31.07.2014 DE 102014011500
(43) Veröffentlichungstag der Anmeldung: 07.06.2017
(73) Patentinhaber: WABCO GmbH, 30453 Hannover (DE)
(72) Erfinder: BINDER, Hartmut, 30657 Hannover (DE); LENZ, Thomas, 31275 Lehrte (DE); WOHLTMANN, Dirk, 30890 Barsinghausen (DE)
(74) Vertreter: Lauerwald, Jörg
(86) Internationale Anmeldenummer: PCT/EP2015/001048
(87) Internationale Veröffentlichungsnummer: WO 2016/015793

(56) Entgegenhaltungen:
- EP-A1- 2 384 941
- EP-A1- 2 664 506
- WO-A1-2007/139488

## Beschreibung

Die Erfindung betrifft ein Verfahren und eine Brems-Steuereinrichtung zur Stabilisierung einer Fahrzeug-Kombination, die aus einem Zugfahrzeug und mindestens einem Anhängerfahrzeug gebildet ist.

Bei Fahrzeug-Kombinationen kann eine Instabilität auftreten, wenn die Gesamt-Bremswirkung des Zugfahrzeugs höher ist als diejenige des Anhängerfahrzeugs; hierbei kann die Fahrzeug-Kombination z. B. seitlich ausknicken. Bremsvorgänge einer Fahrzeug-Kombination werden daher im Allgemeinen dahingehend ausgelegt, dass die Einzelfahrzeuge weitgehend gleich ausgebremst werden.

Die DE 10 2009 031 851 A1 beschreibt ein Verfahren zur Abbremsung einer Zugfahrzeug-Anhänger-Kombination, wobei in einem Fahrzustand mit unbetätigter Betriebsbremse ein auf das Zugfahrzeug aufschiebender Anhänger erkannt wird und bei Erreichen und Überschreiten einer vorgeschriebenen Schubwirkung des Anhängers die Bremsanlage des Anhängers bei unbetätigter Betriebsbremse des Zugfahrzeugs automatisch betätigt wird, um eine stabilisierende Bremswirkung auf den Anhänger auszuüben. Die Schubwirkung des Anhängers wird aus einer Differenz oder dem Quotienten der Ist-Motordrehzahl des Zugfahrzeugs und einer vorgegebenen Soll- Motordrehzahl, d.h. aus einer Erhöhung der Motordrehzahl des Zugfahrzeugs und somit einer Motorbremswirkung ermittelt, und der Anhänger daraufhin gezielt abgebremst.

Die DE 203 15 755 U1 beschreibt eine Bremsanlage, bei der bei Freigeben des Gaspedals des Zugfahrzeugs eine Vorbremsung einer Auflaufbremse des Anhängers zugelassen wird.

Die EP 0 914 998 B1 beschreibt ein Verfahren zur Abstimmung von Bremskräften zwischen einem Zugfahrzeug und einem Anhängerfahrzeug, bei dem aus schlupfbehafteten Raddrehzahl-Signalen des Zugfahrzeug-Anhängerfahrzeugs jeweils Teilfahrzeug-Geschwindigkeiten ermittelt werden und ein Unterscheid zwischen den zeitlichen Ableitungen der ermittelten Teilfahrzeug-Geschwindigkeiten ermittelt wird und mit einem Grenzwert verglichen wird, wobei bei Überschreiten des Grenzwertes wenigstens ein Bremssteuerwert verändert wird.

Die EP 1 439 103 A1 beschreibt ein Fahrdynamik-Regelsystem, bei dem aus mehreren Sensoren unterschiedliche Fahrdynamiksignale bestimmt werden und bei Ermittlung eines instabilen Fahrverhaltens die Bremsanlage des Zugfahrzeugs betätigt werden kann, oder auch ein Bremsanforderungssignal an das Anhängerfahrzeug ausgehen wird.

Die DE 103 11 838 A1 ist auf die Bestimmung der Gefahr eines Umkippens einer Fahrzeug-Kombination gerichtet, wobei Raddrehzahl-Signale des Anhängers herangezogen werden.

Die EP 1 167 141 B1 beschreibt ein Verfahren zur Verhinderung von Fahrzeuginstabilitäten in einem Fahrzeugverbund, bei der eine Differenz zwischen Kurswunsch des Fahrers und tatsächlicher Fahrbewegung in Form eines Gierwinkels erfasst wird und ggf. ein Bremsanforderungssignal an einer Anhänger-Hinterachse ausgegeben wird.

Die DE 101 44 299 B4 beschreibt ein weiteres Verfahren zur Stabilisierung einer Fahrzeug-Kombination, bei der bei Instabilität ein Anhängerbremsdruck abgesenkt oder zyklisch moduliert werden kann.

Die DE 10 2004 036 089 A1 beschreibt ein Verfahren zur Dämpfung von Gierschwingungen eines Anhängers mit Betätigen einzelner oder aller Radbremsen des Anhängers.

Die WO 2007/139488 A1 offenbart ein Bremssteuerungssystem mit einer Hilfsbremseinrichtung, die dazu ausgelegt ist, auf eine angetriebene Radachse des Fahrzeugs zu wirken, um eine Bremswirkung zu erzielen.

Die EP 2 384 941 A1 offenbart ein Verfahren zum Bremsen eines fremdkraftbetätigten Gerätes und ein Bremssystem eines derartigen fremdkraftgebremsten Gerätes, wobei in Abhängigkeit von einem Schleppmoment das Gerät ziehenden Nutzfahrzeuges ein Bremssignal zum Abbremsen des Anhängers bei Motorbremsung des Nutzfahrzeuges generiert wird.

Derartige Verfahren sind jedoch zum Teil recht komplex und erfordern die Auswertung einer Vielzahl von Sensorsignalen oder auch komplexere Bremssteuereingriffe.

Der Erfindung liegt die Aufgabe zugrunde, ein Verfahren und eine Brems-Steuereinrichtung zur Stabilisierung einer Fahrzeug-Kombination zu schaffen, die Instabilitäten insbesondere durch ein Aufschieben des Anhängerfahrzeugs verringern kann.

Die Aufgabe wird durch ein Verfahren nach Anspruch 1 und eine Brems-Steuereinrichtung nach Anspruch 8 gelöst. Weiterhin ist eine entsprechende Fahrzeug-Kombination vorgesehen.

Erfindungsgemäß wird somit gemäß einem ersten Kriterium eine Verzögerung des Zugfahrzeugs ermittelt, die durch einen bremsenden Radschlupf der Räder der mindestens einen angetriebenen Achse des Zugfahrzeugs ohne eine Betätigung der Radbremsen bzw. Betriebsbremsen dieser mindestens einen angetriebenen Achse erfolgt. Bei Erkennen einer derartigen nicht radgebremsten Verzögerung des Zugfahrzeugs, gegebenenfalls in Abhängigkeit weiterer Kriterien, wird das Anhängerfahrzeug abgebremst, d.h. ein Bremsanforderungssignal an das Anhängerfahrzeug ausgegeben zur Betätigung der Radbremsen des Anhängerfahrzeugs, um die Fahrzeug-Kombination hierdurch zu stabilisieren. Die Stabilisierung erfolgt somit vorteilhafterweise durch eine Verminderung der Schubwirkung und/oder Ausbildung einer Zugwirkung bzw. abbremsende Kraft des Anhängerfahrzeugs auf das Zugfahrzeug.

Somit wird die nicht betriebsgebremste Verzögerung des Zugfahrzeugs alleine aus Raddrehzahlen des Zugfahrzeugs und der Fahrzeuggeschwindigkeit des Zugfahrzeugs ermittelt, wobei die Fahrzeuggeschwindigkeit als interne Referenzgeschwindigkeit, z. B. Controller-interne Geschwindigkeit ohnehin aus den Raddrehzahlen des Zugfahrzeugs bestimmt wird und somit zur Verfügung steht. Ergänzend kann eine Fahrzeuggeschwindigkeit auch durch weitere Daten aufgenommen werden, zum Beispiel aus dem GPS, wie es als solches bekannt ist.

Es entfallen daher insbesondere auch komplexere Betrachtungen der Raddrehzahlen oder Radschlüpfe des Anhängerfahrzeugs. Die Schubwirkung des Anhängerfahrzeugs auf das Zugfahrzeug kann somit vollständig aus Daten bzw. Signalen des Zugfahrzeugs bestimmt werden, z. B. als bremsender Schubbetrieb bzw. als Motorbremswirkung.

Die Motorbremswirkung kann auch ergänzend aus Daten des Zugfahrzeugs ermittelt werden, insbesondere bei Vorliegen eines Retarders, der eine Bremsung über den Antriebsstrang, d. h. die Antriebswelle auf die angetriebene Achse ermöglicht; hier kann somit das Motorbremssignal bzw. Retarder-Signal ergänzend herangezogen werden. Weiterhin können allgemein auch Daten aus dem Motorsteuergerät herangezogen werden, um eine Motorbremswirkung zu überprüfen. Derartige Maßnahmen sind jedoch grundsätzlich nicht erforderlich.

Zur Ermittlung, dass keine Betätigung der Radbremsen an der angetriebenen Achse vorliegt, kann zum Beispiel das im Fahrzeug zur Verfügung stehende Bremslichtsignal herangezogen werden, oder auch ein Drucksignal eines internen Drucksensors des Bremssystems, das den Fahrerbremswunsch detektiert.

Der bremsende Radschlupf der Räder der angetriebenen Achse des Zugfahrzeugs wird vorteilhafterweise durch einen Vergleich der Fahrzeuggeschwindigkeit des Zugfahrzeugs mit einer aus der Raddrehzahl ermittelten Radgeschwindigkeit durchgeführt, und/oder durch eine Radschlupfauswertung des Fahrzeugs unter Heranziehung der Raddrehzahlen der angetriebenen Achse und einer weiteren Achse des Zugfahrzeugs.

Ein bremsender Radschlupf an der angetriebenen Achse des Zugfahrzeugs, d. h. den Rädern der angetriebenen Achse, liegt somit vor, wenn eine Radgeschwindigkeit, unterhalb der Fahrzeuggeschwindigkeit liegt, wobei bei schlupffreier Fahrt die Radgeschwindigkeit der Fahrzeuggeschwindigkeit entspricht.

Erfindungsgemäß wird aus Sicherheitsgründen ein Bremsregeleingriff am Anhängerfahrzeug ausgeschlossen, zum Beispiel bei aktivem Eingriff einer Antriebsschlupfregelung, oder auch eines Stabilitätssystems, um durch eine Bremswirkung des Anhängers keine störenden Einflüsse hervorzurufen.

Nach der Erfindung kann die Neigung der Fahrbahn herangezogen werden; so kann vorgesehen sein, bei einer Bergauffahrt, d. h. positiver Steigung der Fahrbahn, eine Abbremsung des Anhängerfahrzeugs auszuschießen, da in einem wertigen Fall bereits eine Bremswirkung des Anhängers vorliegt. Hiermit kann der Ausschluss insbesondere in Abhängigkeit der Steigung der Fahrbahn und der Fahrgeschwindigkeit erfolgen.

Weiterhin kann ergänzend vorgesehen sein, bei einer Bergabfahrt auch ohne Vorliegen einer nicht betriebsbegrenzten Verzögerung die Anhängerbremsen zu betätigen.

Die Erfindung kann grundsätzlich bei Fahrzeugen mit Antrieb an nur der Hinterachse, nur der Vorderachse oder auch an mehreren Achsen durchgeführt werden. Sie kann weiterhin bei Anhängerfahrzeugen mit lediglich pneumatischer Ankopplung an das Zugfahrzeug oder auch bei Anhängerfahrzeugen mit eigener Anhänger- Bremssteuereinrichtung und pneumatischer und elektronischer Ankopplung an das Zugfahrzeug realisiert werden.

Die Erfindung wird im Folgenden anhand der beiliegenden Zeichnungen an einer Ausführungsform (hier beispielhaft mit lediglich Hinterachsantrieb) erläutert. Es zeigen:
- Fig. 1: eine Fahrzeug-Kombination mittels einer Ausführungsform der Erfindung in Seitenansicht, einschließlich Darstellung verschiedener Fahrbahn-Steigungen;

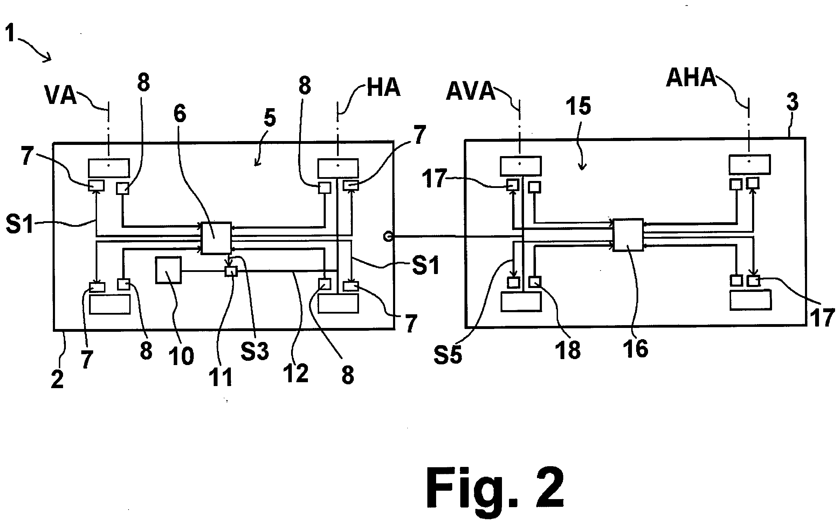

- Fig. 2: eine Aufsicht auf die Fahrzeug-Kombination;
- Fig. 3: ein Flussdiagramm eines erfindungsgemäßen Verfahrens gemäß einer Ausführungsform; und
- Fig. 4: ein Flussdiagramm eines erfindungsgemäßen Verfahrens gemäß einer weiteren Ausführungsform.

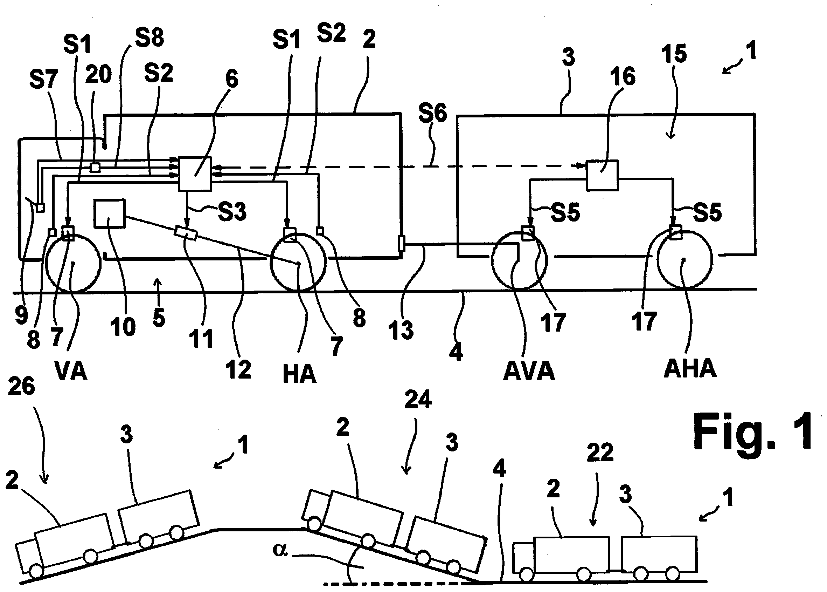

Eine Fahrzeug-Kombination 1 wird aus einem Zugfahrzeug 2 und einem Anhängerfahrzeug 3 gebildet und fährt auf einer Fahrbahn 4. Das Zugfahrzeug 2 weist eine Vorderachse VA mit Vorderrädern VA-1 und VA-2 und eine angetriebene Hinterachse HA mit Hinterrädern HA-1 und HA- 2 auf, weiterhin ein Zugfahrzeug-Bremssystem 5 mit einer Brems-Steuereinrichtung 6, von der Brems-Steuereinrichtung 6 durch Brems- Steuersignale S1 angesteuerte Radbremsen 7, Raddrehzahlsensoren 8 und ggf. weitere Komponenten, zum Beispiel gemäß Fig. 1 das vom Fahrer zu betätigende Bremspedal 9 auf. Die Raddrehzahlsensoren 8 geben Raddrehzahl-Signale S2 an die Brems-Steuereinrichtung 6 aus. Weiterhin weist das Zugfahrzeug 2 eine Motor-Getriebe-Einheit 10 auf, die über eine Antriebswelle 12 die Räder HA-1 und HA-2 der Hinterachse HA antreibt. Hierbei ist ein Retarder 11 vorgesehen, der von der Brems-Steuereinrichtung 6 direkt oder indirekt ansteuerbar ist. Die Brems-Steuereinrichtung 6 kann somit über Motorbrems-Steuersignale S3 den Retarder 11 (bzw. dessen hier nicht detaillierter gezeigte Retarder-Steuereinrichtung) ansteuern; weiterhin kann die Brems-Steuereinrichtung 6 Zustandssignale der Motor-Getriebeeinheit 10 von deren Motorsteuergerät aufnehmen.

Das Anhängerfahrzeug 3 weist eine Anhänger-Vorderachse AVA, eine Anhänger-Hinterachse AHA mit zum Beispiel jeweils zwei Rädern und weiterhin ein Anhänger-Bremssystem 15 mit Anhänger-Radbremsen 17 auf. Das Anhänger-Bremssystem 15 kann z. B. pneumatisch ausgebildet und pneumatisch ausgesteuert sein, oder auch Anhänger-Raddrehzahlsensoren 18 und eine eigene Anhänger-Bremssteuereinrichtung 16, entsprechend dem Zugfahrzeug 2, aufweisen. Bei einer derartigen Ausbildung gibt die Anhänger- Bremssteuereinrichtung 16 Anhänger-Bremssteuersignale S5 an die Anhänger- Radbremsen 17 aus. Zwischen der Brems-Steuereinrichtung 6 und der Anhänger-Bremssteuereinrichtung 16 erfolgt dann in bekannter Weise der Austausch von Signalen; insbesondere werden Brems- Anforderungssignale S6 von der Brems-Steuereinrichtung 6 an die Anhänger- Bremssteuereinrichtung 16 ausgegeben.

Die Brems-Steuereinrichtung 6 und - falls wie bei dieser Ausführungsform vorgesehen auch die Anhänger- Bremssteuereinrichtung 16 - können zum Beispiel ein ABS-Steuergerät oder auch ein EBS-Steuergerät sein. Grundsätzlich können in die Bremssysteme 5 und 15 unterschiedliche Fahrstabilitäts-Regelungen aufgenommen sein, d. h. neben ABS zum Beispiel auch ein ESP (Elektronisches Stabilitätsprogramm) oder ESC oder RSS.

Das Anhängerfahrzeug 3 ist hier als Deichselanhänger gezeigt; es kann zum Beispiel auch ein Sattelauflieger sein. Weiterhin kann das Anhängerfahrzeug 3 zum Beispiel auch einachsig sein. Grundsätzlich kann zum Beispiel auch das Zugfahrzeug 1 zusätzlich zu der Vorderachse VA und der Hinterachse HA noch weitere Achsen aufweisen, zum Beispiel zwei Hinterachsen, oder eine Liftachse.

Die Brems-Steuereinrichtung 6 nimmt über die Raddrehzahl-Signale S2 somit die Raddrehzahlen n_VA der Vorderachse VA und die Raddrehzahlen n_HA der Hinterachse HA auf; hierbei werden entsprechend für die einzelnen Räder HA-1, HA-2, VA-1, VA-2, d.h. links und rechts, jeweils separate Raddrehzahlen ermittelt, wobei für die Beschreibung des Verfahrens grundsätzlich zunächst einheitliche Raddrehzahlen n_HA der Hinterachse HA und einheitliche Raddrehzahlen n_VA der Vorderachse VA angenommen werden können.

Das erfindungsgemäße Verfahren kann von der Brems- Steuereinrichtung 6 und/oder Anhänger-Bremssteuereinrichtung 16 durchgeführt werden. Nachfolgend wird eine Ausführungsform beschrieben, bei der das Verfahren in der Brems-Steuereinrichtung 6 durchgeführt wird.

Die Brems-Steuereinrichtung 6 kann auch zusätzliche Fahrdynamik-Größen des Zugfahrzeugs 2 zum Beispiel von einem fahrzeuginternen Datenbus übernehmen oder selbsttätig ermitteln. Aus dem Raddrehzahlen n_VA und n_HA kann die Brems-Steuereinrichtung 6 in bekannter Weise eine Controller-Interne Referenzgeschwindigkeit ermitteln und als Fahrzeuggeschwindigkeit v heranziehen; weiterhin kann die Brems-Steuereinrichtung 6 die Fahrzeuggeschwindigkeit v auch ergänzend oder alternativ von einem Navigationssystem oder anderen fahrzeugspezifischen Quellen ermitteln oder heranziehen.

Die Brems-Steuereinrichtung 6 ermittelt, ob der Fall vorliegt, dass zumindest ein erstes Kriterium K1 erfüllt ist, gemäß dem an der angetriebenen Achse HA des Zugfahrzeugs 2 die Bedingungen erfüllt sind:
erste Bedingung K1a: es liegt ein bremsender, d.h. verzögernder Radschlupf s_HA an dem linken Hinterrad HA-1 und/oder dem rechten Hinterrad HA-2 vor
zweite Bedingung K1b: es liegt keine Betätigung einer Radbremse (17) des linken Hinterrades HA-1 und/oder des rechten Hinterrades HA-2 vor.

Vorzugsweise umfasst das erste Kriterium K1 weiterhin folgende Bedingungen:
dritte Bedingung K1c: es liegt kein Radschlupf s_VA an den Vorderrädern VA-1 und VA-2 der nicht angetriebenen Vorderachse VA vor.
vierte Bedingung K1d: es liegt eine Fahrzeugverzögerung vor, d.h. dv/dt < 0.

Zu K1a: ein bremsender Radschlupf s_HA bedeutet, dass die Radgeschwindigkeit vr der betreffenden Räder, hier somit der Hinterräder HA-1 und HA-2, kleiner als die Fahrzeuggeschwindigkeit v ist,
d.h. vr < v

Allerdings kann die Bedingung K1a auch umfassen, dass der bremsende Radschlupf s_HA der Hinterachse HA einen Mindestwert bzw. Grenzwert gs überschreitet, so dass das Verfahren nicht zu früh oder zu häufig einsetzt.

K1b: bedeutet S1 = 0, wobei auch andere Signale herangezogen werden können, z. B. Vorliegen eines Bremslichtsignals S7 oder Vorliegen eines Fahrerbremswunsches, der z. B. durch Druckmessung mittels eines internen Drucksensors 20 des Bremssystems 5 des Zugfahrzeugs 2 als Bremswunsch-Signal S8 ermittelt werden kann.

K1c: diese Bedingung kann ergänzend herangezogen werden und bedeutet z. B., dass s_VA kleiner einem zweiten Schlupf-Schwellwert gs2 (Schlupf-Schwellwert der nicht angetriebenen Achse, hier der Vorderachse VA) ist,
d.h. s_VA < gs2.
Vorteilhafterweise kann K1c auch einen Vergleich der Radschlüpfe an Vorderachse VA und Hinterachse HA umfassen, d.h. es wird überprüft, ob der Schlupf an der Hinterachse HA größer als an der Vorderachse HA ist, d.h.
s_VA < s_HA

K1d ist ebenfalls nur optional, da in die gemessene Verzögerung auch die Steigung α der Fahrbahn 4, d.h. insbesondere gemäß der Darstellung in Fig. 1 unten Ebenenfahrt 22, Bergauffahrt 24 oder Bergabfahrt 26 eingehen kann, die durch separate Kriterien ermittelt werden kann. So kann auf eine Bergauffahrt 24 entschieden werden, wenn die Steigung α eine Steigungsschwelle α_sw1 überschreitet, und auf eine Bergabfahrt 26, wenn der Betrag der Steigung eine zweite Steigungsschwelle, insbesondere ein Grenz-Gefälles α_sw2 überschreitet.

Nachfolgend wird vorteilhafterweise ermittelt, ob ein Ausschlusskriterium K2 erfüllt ist, das ein oder mehrere Ausschlussbedingungen K2a, K2b aufweisen kann. Bei Vorliegen des Ausschlusskriteriums K2 wird das Anhängerfahrzeug 3 nicht abgebremst. Eine erste Ausschlussbedingung K2a ist, ob eine Bergauffahrt 24 vorliegt; dies kann aus Kartendaten, aber z. B. auch mittels eines Längsbeschleunigungssensors ermittelt werden, der dann allerdings dynamische Längsbeschleunigungen, d.h. dv/dt, mit berücksichtigen wird. Weiterhin kann eine zweite Ausschlussbedingung K2b das Vorliegen einer aktiven Fahrdynamik-Regelung überprüfen, d.h. die zweite Ausschlussbedingung K2b ist erfüllt, wenn eine Fahrdynamik-Regelung aktiv ist, damit die aktive Fahrdynamik-Regelung wie ESP oder ABS, aber auch eine Antriebsschlupfregelung ASR auch in den Phasen, wo die Radbremsen 7 nicht betätigt werden, nicht durch das Abbremsen des Anhängerfahrzeuges 3 negativ beeinflusst werden. Die Ausschlussbedingungen K2a, K2b sind vorteilhafterweise in einer ODER-Bedingung verknüpft, so dass bei Vorliegen einer Ausschlussbedingung K2a und/oder K2b das Ausschlusskriterium K2 erfüllt ist.

Die Brems-Steuereinrichtung 6 ermittelt durch das erste Kriterium K1 somit eine Verzögerung durch die Motor-Getriebe-Einheit 10 und/oder den Retarder 11, d. h. über den Antriebsstrang und die Antriebswelle 12 auf die angetriebene Hinterachse HA. Anstelle oder ergänzend kann als drittes Kriterium K3 kann auch direkt eine Motorbremswirkung ermittelt werden. Das dritte Kriterium K3 kann auch weitere zur Verfügung stehende Signale oder Daten, die eine Motorverzögerung betreffen, verwenden. Insbesondere kann überprüft werden, ob S3 = 1 ist, d. h. eine Motor-Bremsanforderung erfolgte; weiterhin können auch Daten einer Motorsteuerung aufgenommen werden, aus denen zusammen mit Daten über eine Gangwahl bzw. Getriebestellung auf eine Drehzahl der Antriebswelle 12 geschlossen werden kann.

Das erste Kriterium K1 und das dritte Kriterium K3 können somit alternativ durchgeführt werden, oder es kann bei Erfüllen des dritten Kriteriums K3 auch rein sicherheitshalber eine gewisse Abbremsung des Anhängerfahrzeuges 3 erfolgen, um nachfolgende Instabilitäten im Voraus zu vermeiden.

Falls das erste Kriterium K1 erfüllt ist und das Ausschlusskriterium K2 nicht erfüllt ist, gibt die Brems-Steuereinrichtung 6 ein Signal S6 an die Anhänger-Bremssteuereinrichtung 16, damit diese über Anhänger- Bremssteuersignale S5 die Anhänger-Radbremsen 17 einer oder mehrerer Anhängerachsen, d. h. die Radbremsen 17 der Anhänger- Vorderachse AVA und/oder der Anhänger-Hinterachse HAA abbremst. Durch diese Bremsung des Anhängerfahrzeugs 3 wird über die Anhängerkupplung 13 auch das Zugfahrzeug 2 abgebremst. Weiterhin wird eine Stabilisierung der Fahrzeug-Kombination 1 erreicht.

Weiterhin kann durch die Brems-Steuereinrichtung 6 auch die Motor-Getriebe-Einheit 10 aktiv angesteuert oder geregelt werden, um zum Beispiel ein höheres Antriebsmoment zu erreichen, um die Instabilität durch das von hinten aufschiebende Anhängerfahrzeug 3 bzw. die Motorbremswirkung zumindest zu verringern. Hierbei können allerdings andere Regelsysteme Vorrang haben, zum Beispiel ein Abstands-Regelungssystem ACC oder eine Tempomatfunktion CC, damit durch eine Erhöhung des Antriebsmomentes keine gefährlichen Fahrsituationen herbeigeführt werden.

Weiterhin kann die Steigung der Fahrbahn 4 mit einbezogen werden, um eine aktive Abbremsung einzuleiten. So wird erkannt, dass bei einem Gefälle, d. h. Bergabfahrt 26, eine Instabilität durch das von hinten aufschiebende Fahrzeug 3 bereits bei geringem oder ohne Schlupf s_HA der Hinterräder HA-1, HA-2 auftreten kann. So kann zum Beispiel bei einer Bergabfahrt 26 oberhalb des Grenz-Gefälles α_sw2 oder in Abhängigkeit einer Tabelle, die Daten für das jeweilige Gefälle und die Fahrgeschwindigkeit v enthält, eine Ansteuerung der Anhänger- Radbremsen 17 vorgesehen sein; dies kann als viertes Kriterium K4 eingeführt werden.

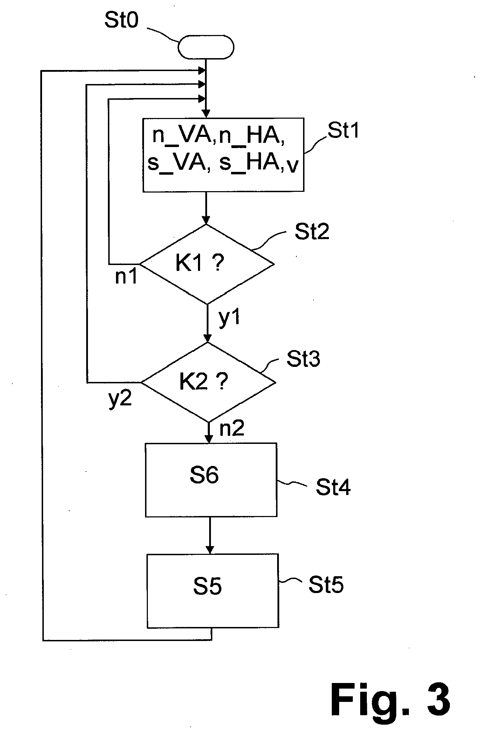

Das erfindungsgemäße Verfahren kann somit gemäß einer Ausführungsform durch das Flussdiagramm der Fig. 3 beschrieben werden:
Nach dem Start in dem Schritt St0 werden im Schritt St1 die Raddrehzahl-Signale S2 aufgenommen und die Raddrehzahlen n_HA der Hinterachse HA und die Raddrehzahlen n_VA der Vorderachse VA erfasst. Hierbei können vorzugsweise für die Vorderräder VA-1 und VA-2 sowie die Hinterräder HA-2 separate Raddrehzahlen, z. B. n_HA-1 des linken Hinterrades HA-1 und n_HA-2 des rechten Hinterrades HA-2 sowie n_VA-1 des linken Vorderrades VA-1 und n_VA-2 des rechten Vorderrades HA-2, ermittelt werden; der Einfachheit halber wird hier jeweils ein achsweise gemittelter Wert betrachtet.

Weiterhin wird in Schritt St1 eine Fahrzeuggeschwindigkeit v aus den Raddrehzahlen n_HA und n_VA als Controller-Interne-Referenzgeschwindigkeit über einen relevanten Zeitraum ermittelt, oder auch aus fahrzeuginternen Daten übernommen oder ermittelt.

Weiterhin wird in Schritt St1 der Radschlupf s_HA der Hinterachse und der Radschlupf s_VA der Vorderachse ermittelt, wie oben erläutert.

Im nachfolgenden Schritt St2 werden die Bedingungen K1a, K1b des ersten Kriteriums K1 überprüft: Liegt ein bremsender Radschlupf an der Hinterachse HA vor, der zumindest größer ist als ein erster Schlupf-Schwellwert gs (Schlupf-Schwellwert der angetriebenen Achse, hier der Hinterachse HA), und liegt keine Betätigung einer Radbremse (Betriebsbremse) 7 an der Hinterachse HA vor?

Hierbei können in Schritt St2 vorzugsweise auch die weiteren Bedingungen K1c, K1d des ersten Kriteriums K1 überprüft werden.

Falls das erste Kriterium K1 nicht erfüllt ist, wird gemäß Fig. 3 das Verfahren gemäß Verzweigung n1 vor den Schritt St1 zurück gesetzt. Ansonsten wird gemäß y1 der nachfolgende Entscheidungsschritt St 3 durchgeführt, in dem überprüft wird, dass das Ausschlusskriterium K2 nicht erfüllt ist, d. h. es liegt nicht eine der folgenden Fälle vor: Bergauffahrt 24, Aktivität der Fahrdynamik-Regelung. Falls mindestens eines der Ausschlusskriterien, d.h. hier somit das erste Ausschlusskriterium K2a und/oder das zweite Ausschlusskriterium K2b erfüllt ist, wird das Verfahren gemäß der Verzweigung y2 wiederum zurück gesetzt, ansonsten wird gemäß n2 der Schritt St4 durchgeführt.

In Schritt St4 wird nachfolgend von der Brems-Steuereinrichtung 6 zu der Anhänger-Bremssteuereinrichtung 16 ein Bremsanforderungssignal S6, so dass in Schritt St5 die Anhänger-Bremssteuereinrichtung 16 Anhänger-Bremssteuersignale S5 an die Radbremsen 17 der Anhängervorderachse AVA und/oder der Anhänger-Hinterachse AHA ausgibt und hierdurch das Anhängerfahrzeug 3 abbremst.

Nachfolgend wird das Verfahren vor den Schritt St1 zurückgesetzt; das erfindungsgemäße Verfahren kann somit einem Regelverfahren darstellen, das durchgeführt wird, bis der instabile Zustand gemäß Kriterium K1 nicht mehr erfüllt ist.

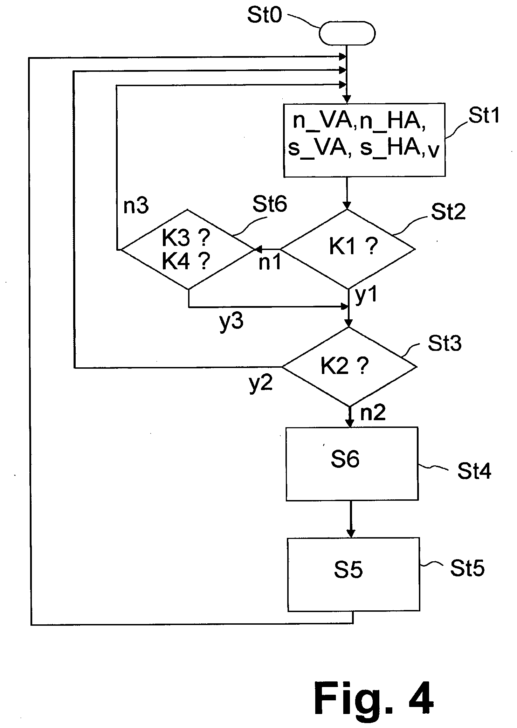

Bei der Ausführungsform der Fig. 4 wird bei ansonsten gleicher Bezeichnung wie der Fig. 3 in der Verzweigung n1 der Entscheidungsschritt St6 durchgeführt, der das dritte Kriterium K3 und/oder das vierte Kriterium überprüft wird. Bei dem dritten Kriterium wird somit überprüft, ob eine Motorbremswirkung vorliegt, obwohl in Schritt St2 kein relevanter abbremsender Radschlupf s_HA der Hinterachse HA ermittelt wurde. Hierbei kann gemäß den obigen Ausführungen somit überprüft werden, ob Motorbrems-Steuersignale S3 = 1 vorliegen oder eine Motorbremswirkung aus Daten der Motorsteuerung und eines Getriebestellers ermittelt werden kann. Falls in Schritt St6 die Bergabfahrt 26 überprüft wird, kann hier z. B. aufgrund einer Tabelle bzw. Tafel überprüft werden, ob bei derzeitigem Gefälle und derzeitiger Fahrzeuggeschwindigkeit v das vierte Kriterium K4 erfüllt ist.

Somit kann bei Erfüllen des dritten Kriteriums K3 und/oder des vierten Kriteriums K4 gemäß Verzweigung S3 wiederum der Schritt St3 durchgeführt wird, ansonsten das Verfahren gemäß n3 wiederum zurück gesetzt wird.

### Bezugszeichenliste (Bestandteil der Beschreibung)

- 1: Fahrzeug-Kombination
- 2: Zugfahrzeug
- 3: Anhängerfahrzeug
- 4: Fahrbahn
- 5: Zugfahrzeug-Bremssystem
- 6: Brems-Steuereinrichtung
- 7: Radbremsen
- 8: Raddrehzahlsensoren
- 9: Bremspedal
- 10: Motor-Getriebe-Einheit
- 11: Retarder
- 12: Antriebswelle
- 13: Anhängerkupplung
- 15: Anhänger-Bremssystem
- 16: Anhänger-Bremssteuereinrichtung
- 17: Anhänger-Radbremsen
- 18: Anhänger-Raddrehzahlsensoren
- 20: interner Drucksensor des Zugfahrzeug-Bremssystems 5
- 22: Ebenenfahrt
- 24: Bergfahrt
- 26: Bergabfahrt

- AVA: Anhänger-Vorderachse
- AHA: Anhänger-Hinterachse

- VA: Vorderachse
- HA: Hinterachse
- VA-1, VA-2: Vorderräder
- HA-1, HA-2: Hinterräder
- HA-1: linkes Hinterrad
- HA-2: rechtes Hinterrad

- n_VA: Raddrehzahlen der Vorderachse
- n_HA: Raddrehzahlen der Hinterachse

- s_HA: Radschlupf der Hinterachse
- s_VA: Radschlupf der Vorderachse

- v: Fahrzeuggeschwindigkeit
- vr: Radgeschwindigkeit

- gs: erster Schlupf-Schwellwert der angetriebenen Achse
- gs2: zweiter Schlupf-Schwellwert der nicht angetriebenen Achse

- S1: Brems- Steuersignale
- S2: Raddrehzahl-Signale
- S3: Motorbrems-Signale
- S5: Anhänger-Bremssteuersignale
- S6: Brems-Anforderungssignale
- S7: Bremslichtsignal
- S8: Bremswunsch-Signal

- K1: erstes Kriterium
- K1a: erste Bedingung
- K1b: zweite Bedingung
- K1c: dritte Bedingung
- K1d: vierte Bedingung

- K2: Ausschlusskriterium
- K2a: erste Ausschlussbedingung (keine Bergfahrt)
- K2b: zweite Ausschlussbedingung (kein Regeleingriff)
- K3: drittes Kriterium (Motorbremswirkung)
- K4: viertes Kriterium (Bergabfahrt)

- α: Steigung der Fahrbahn 4
- α_sw1: Steigungsschwelle
- α_sw2: Grenz-Gefälle

## Patentansprüche

1. Verfahren zum Stabilisieren einer Fahrzeug-Kombination (1), die ein Zugfahrzeug (2) und mindestens ein Anhängerfahrzeug (3) aufweist, wobei das Verfahren mindestens folgende Schritte aufweist:
Ermitteln von Raddrehzahlen (n_HA) zumindest einer angetriebenen Achse (HA) des Zugfahrzeugs (2) und einer Fahrzeuggeschwindigkeit (v) des Zugfahrzeugs (2) (St1),
Überprüfen mindestens eines ersten Kriteriums (K1), ob an der angetriebenen Achse (HA) des Zugfahrzeugs (2) ein bremsender Radschlupf (s_HA) ohne eine Betätigung einer Radbremse (17) der angetriebenen Achse (HA) vorliegt (St2), und
bei Erfüllen des ersten Kriteriums (K1) Ansteuern mindestens einer Radbremse (17) des Anhängerfahrzeugs (3) (St5),
wobei ein Ausschlusskriterium (K2) mit ein oder mehreren Ausschlussbedingungen (K2a, K2b) überprüft wird, wobei bei Vorliegen mindestens einer Ausschlussbedingung (K2a, K2b) die
Radbremsen (17) des Anhängerfahrzeugs (3) nicht angesteuert werden,
**dadurch gekennzeichnet, dass** als erste Ausschlussbedingung (Ka2) überprüft wird, ob eine Bergauffahrt (24) vorliegt, wobei bei Bergauffahrt (24) die Radbremsen (17) des Anhängerfahrzeugs (3) nicht angesteuert
werden, und/oder dass als zweite Ausschlussbedingung (K2b) überprüft wird, ob eine Fahrstabilitätsregelung am Zugfahrzeug (2) aktiv ist und bei Vorliegen einer Fahrstabilitätsregelung am Zugfahrzeug (2) die Radbremsen (17) des Anhängerfahrzeugs (3) nicht angesteuert werden.

2. Verfahren nach Anspruch 1, **dadurch gekennzeichnet, dass** bei dem ersten Kriterium (K1) die Überprüfung einer ersten Bedingung (K1a), ob an der angetriebenen Achse (HA) des Zugfahrzeugs (2) ein bremsender Radschlupf (s_HA) vorliegt, durch einen Vergleich der Fahrzeuggeschwindigkeit (v) des Zugfahrzeugs (2) mit einer aus den Raddrehzahlen (n_HA) der angetriebenen Achse (HA) ermittelten Radgeschwindigkeit (vr) erfolgt.

3. Verfahren nach Anspruch 1 oder 2, **dadurch gekennzeichnet, dass** bei dem ersten Kriterium (K1) weiterhin überprüft wird, ob an einer nicht angetriebenen Achse (VA) des Zugfahrzeugs (2) kein bremsender Radschlupf (s_VA oder kein relevanter bremsender Radschlupf (s_VA) vorliegt.

4. Verfahren nach einem der vorherigen Ansprüche, **dadurch gekennzeichnet, dass** bei dem ersten Kriterium (K1) die Bedingung (K1b) des Fehlens der Betätigung der Radbremsen (17) des Zugfahrzeugs (2) ermittelt wird bei Vorliegen eines oder mehrerer der folgenden Bedingungen:
Vorliegen eines Motorbrems-Steuersignals (S3), Fehlen eines Bremslichtsignals (S7), Fehlen eines Fahrerbremswunsch-Signals (S8) durch Druckmessung mittels eines internen Drucksensors (20) des Bremssystems (5) des Zugfahrzeugs (2).

5. Verfahren nach einem der vorherigen Ansprüche, **dadurch gekennzeichnet, dass** als drittes Kriterium (K3) überprüft wird, ob ein Motorbrems-Steuersignal (S3) zum Bremsen der angetriebenen Achse (HA) des Zugfahrzeugs (2) über eine Antriebswelle (12) vorliegt und bei Vorliegen des Motorbrems-Steuersignal (S3) auch bei Nichterfüllen des ersten Kriteriums (K1) ein Ansteuern mindestens einer Radbremse (17) des Anhängerfahrzeugs (3) erfolgt.

6. Verfahren nach einem der vorherigen Ansprüche, **dadurch gekennzeichnet, dass** auch bei Nichterfüllen des ersten Kriteriums (K1) ein viertes Kriterium (K4) überprüft wird, das eine Bergabfahrt 26mit konstanter Fahrgeschwindigkeit (v) ermittelt, und in Abhängigkeit des vierten Kriteriums (K4) mindestens einer Radbremse (17) des Anhängerfahrzeugs (3) angesteuert werden.

7. Verfahren nach einem der vorherigen Ansprüche, **dadurch gekennzeichnet, dass** ein Aufschieben des Anhängerfahrzeuges (3) ohne Einbeziehung von Daten oder Signalen des Anhängerfahrzeuges (3) ermittelt wird.

8. Brems-Steuereinrichtung (6) für ein Zugfahrzeug (2) einer Fahrzeug-Kombination (1), wobei die Brems-Steuereinrichtung (6) Raddrehzahl-Signale (n_VA, n_HA) der Räder der Achsen (vHA) des Zugfahrzeugs (2) aufnimmt und mit einer Anhänger-Bremssteuereinrichtung (16) in Datenverbindung (S6) steht,
wobei die Brems-Steuereinrichtung (6) mindestens ein erstes Kriterium (K1) überprüft, ob an der angetriebenen Achse (HA) des Zugfahrzeugs (2) ein bremsender Radschlupf (s_HA) ohne Betätigung einer Radbremse (17) der angetriebenen Achse (HA) vorliegt, und bei Erfüllen des ersten Kriteriums (K1) ein Brems-Anforderungssignal (S6) zur Ausgabe mindestens eines Anhänger- Bremssteuersignals (S5) an mindestens eine Radbremse (17) des Anhängerfahrzeugs (3) zum Abbremsen des Anhängerfahrzeugs (3) ausgibt,
wobei ein Ausschlusskriterium (K2) mit ein oder mehreren Ausschlussbedingungen (K2a, K2b) überprüft wird, wobei bei Vorliegen mindestens einer Ausschlussbedingung (K2a, K2b) die Radbremsen (17) des Anhängerfahrzeugs (3) nicht angesteuert werden, **dadurch gekennzeichnet, dass**
als erste Ausschlussbedingung (Ka2) überprüft wird, ob eine Bergauffahrt (24) vorliegt,
wobei bei Bergauffahrt (24) die Radbremsen (17) des Anhängerfahrzeugs (3) nicht angesteuert werden, und/oder dass als zweite Ausschlussbedingung (K2b) überprüft wird, ob eine Fahrstabilitätsregelung am Zugfahrzeug (2) aktiv ist und bei Vorliegen einer Fahrstabilitätsregelung am Zugfahrzeug (2) die Radbremsen (17) des Anhängerfahrzeugs (3) nicht angesteuert werden.

9. Fahrzeug-Kombination (1) mit einem Zugfahrzeug (2) und einem Anhängerfahrzeug (3), wobei das Zugfahrzeug (2) eine Brems- Steuereinrichtung (6) nach Anspruch 8 aufweist und/oder zur Durchführung eines Verfahrens nach einem der Ansprüche 1 bis 7 ausgelegt ist.

## Claims

1. Method for stabilizing a vehicle combination (1) comprising a towing vehicle (2) and at least one trailer vehicle (3), whereby the method comprises at least the following steps:
determining wheel revolution rates (n_HA) of at least one driven axle (HA) of the towing vehicle (2) and a vehicle speed (v) of the towing vehicle (2) (St1),
checking at least a first criterion (K1) as to whether there is braking wheel slip (s_HA) at the driven axle (HA) of the towing vehicle (2) without the operation of a wheel brake (17) of the driven axle (HA) (St2), and if the first criterion (K1) is met, actuating at least one wheel brake (17) of the trailer vehicle (3) (St5),
wherein an exclusion criterion (K2) with one or more exclusion conditions (K2a, K2b) is checked, whereby the wheel brakes (17) of the trailer vehicle (3) are not actuated if at least one exclusion condition (K2a, K2b) is present,
**characterized in that**
as a first exclusion condition (Ka2) a check is made as to whether driving uphill (24) is taking place, whereby the wheel brakes (17) of the trailer vehicle (3) are not actuated if driving uphill (24) is taking place, and/or **in that**
as a second exclusion condition (K2b) a check is made as to whether driving stability control is active on the towing vehicle (2), and the wheel brakes (17) of the trailer vehicle (3) are not actuated if driving stability control is present on the towing vehicle (2).

2. Method according to Claim 1, **characterized in that** for the first criterion (K1), checking for a first condition (K1a) as to whether there is braking wheel slip (s_HA) at the driven axle (HA) of the towing vehicle (2) is carried out by a comparison of the vehicle speed (v) of the towing vehicle (2) with a wheel speed (vr) determined from the wheel revolution rates (n_HA) of the driven axle (HA).

3. Method according to Claim 1 or 2, **characterized in that** for the first criterion (K1), furthermore a check is made as to whether there is no braking wheel slip (s_VA) or no relevant braking wheel slip (s_VA) at a non-driven axle (VA) of the towing vehicle (2).

4. Method according to one of the preceding claims, **characterized in that** for the first criterion (K1), the condition (K1b) of the lack of operation of the wheel brakes (17) of the towing vehicle (2) is determined in the presence of one or more of the following conditions:
the presence of an engine braking control signal (S3), the absence of a brake light signal (S7), the absence of a driver's braking demand signal (S8) determined by a pressure measurement using an internal pressure sensor (20) of the brake system (5) of the towing vehicle (2).

5. Method according to one of the preceding claims, **characterized in that** as a third criterion (K3) a check is made as to whether there is an engine braking control signal (S3) for braking the driven axle (HA) of the towing vehicle (2) by means of a drive shaft (12), and if the engine braking control signal (S3) is present, actuation of at least one wheel brake (17) of the trailer vehicle (3) is carried out even if the first criterion (K1) is not met.

6. Method according to one of the preceding claims, **characterized in that** even if the first criterion (K1) is not met a fourth criterion (K4) is checked that determines downhill travel 26 at a constant driving speed (v), and at least one wheel brake (17) of the trailer vehicle (3) is actuated depending on the fourth criterion (K4).

7. Method according to one of the preceding claims, **characterized in that** pushing by the trailer vehicle (3) is determined without incorporating data or signals of the trailer vehicle (3).

8. Brake control device (6) for a towing vehicle (2) of a vehicle combination (1), whereby the brake control device (6) receives wheel revolution rate signals (n_VA, n_HA) of the wheels of the axles (vHA) of the towing vehicle (2) and has a data connection (S6) to a trailer brake control device (16),
whereby the brake control device (6) checks at least a first criterion (K1) as to whether there is braking wheel slip (s_HA) at the driven axle (HA) of the towing vehicle (2) without operation of a wheel brake (17) of the driven axle (HA), and if the first criterion (K1) is met a brake demand signal (S6) is output in order to output at least one trailer brake control signal (S5) to at least one wheel brake (17) of the trailer vehicle (3) for braking the trailer vehicle (3), wherein an exclusion criterion (K2) with one or more exclusion conditions (K2a, K2b) is checked, whereby the wheel brakes (17) of the trailer vehicle (3) are not actuated if at least one exclusion condition (K2a, K2b) is present,
**characterized in that**
as a first exclusion condition (Ka2) a check is made as to whether driving uphill (24) is taking place, whereby the wheel brakes (17) of the trailer vehicle (3) are not actuated if driving uphill (24) is taking place, and/or **in that**
as a second exclusion condition (K2b) a check is made as to whether driving stability control is active on the towing vehicle (2), and the wheel brakes (17) of the trailer vehicle (3) are not actuated if driving stability control is present on the towing vehicle (2).

9. Vehicle combination (1) with a towing vehicle (2) and a trailer vehicle (3), whereby the towing vehicle (2) comprises a brake control device (6) according to Claim 8 and/or is arranged for performing a method according to any one of Claims 1 to 7.

## Revendications

1. Procédé de stabilisation d'une combinaison de véhicules (1), laquelle comprend un véhicule tracteur (2) et au moins un véhicule remorque (3), le procédé comprenant au moins les étapes suivantes :
détermination de vitesses de rotation de roues (n_HA) d'au moins un essieu moteur (HA) du véhicule tracteur (2) et d'une vitesse de véhicule (v) du véhicule tracteur (2) (St1),
vérification d'au moins un premier critère (K1), selon lequel il existe, au niveau de l'essieu moteur (HA) du véhicule tracteur (2), un patinage de roue freinant (s_HA) sans un actionnement d'un frein de roue (17) de l'essieu moteur (HA) (St2), et
si le premier critère (K1) est rempli, commande d'au moins un frein de roue (17) du véhicule remorque (3) (St5),
un critère d'exclusion (K2) étant vérifié avec une ou
plusieurs conditions d'exclusion (K2a, K2b), les freins de roue (17) du véhicule remorque (3) n'étant pas commandés en présence d'au moins une condition d'exclusion (K2a, K2b),
**caractérisé en ce que**
la première condition d'exclusion (K2a) consiste à vérifier si une montée de côte (24) est présente,
les freins de roue (17) du véhicule remorque (3) n'étant pas commandés en présence d'une montée de côte (24), et/ou
**en ce que** la deuxième condition d'exclusion (K2b) consiste à vérifier si une régulation de la stabilité de conduite est active au niveau du véhicule tracteur (2) et les freins de roue (17) du véhicule remorque (3) n'étant pas commandés en présence d'une régulation de la stabilité de conduite au niveau du véhicule tracteur (2).

2. Procédé selon la revendication 1, **caractérisé en ce qu'**avec le premier critère (K1), la vérification d'une première condition (K1a) selon laquelle il existe un patinage de roue freinant (s_HA) au niveau de l'essieu moteur (HA) du véhicule tracteur (2) est effectuée par une comparaison de la vitesse de véhicule (v) du véhicule tracteur (2) avec une vitesse de roue (vr) déterminée à partir des vitesses de rotation de roue (n_HA) de l'essieu moteur (HA).

3. Procédé selon la revendication 1 ou 2, **caractérisé en ce que** le premier critère (K1) consiste en outre à vérifier l'absence de patinage de roue freinant (s_VA) ou l'absence de patinage de roue freinant pertinent (s_VA) au niveau d'un essieu non moteur (VA) du véhicule tracteur (2).

4. Procédé selon l'une des revendications précédentes, **caractérisé en ce qu'**avec le premier critère (K1), la condition (K1b) de l'absence d'actionnement des freins de roue (17) du véhicule tracteur (2) est déterminée en présence d'une ou plusieurs des conditions suivantes :
présence d'un signal de commande de frein moteur (S3), absence d'un signal de feu stop (S7), absence d'un signal de souhait de freinage du conducteur (S8) par mesure de la pression au moyen d'un capteur de pression interne (20) du système de freinage (5) du véhicule tracteur (2).

5. Procédé selon l'une des revendications précédentes, **caractérisé en ce qu'**un troisième critère (K3) consiste à vérifier si un signal de commande de frein moteur (S3) servant à freiner l'essieu moteur (HA) du véhicule tracteur (2) par le biais d'un arbre d'entraînement (12) est présent et, en présence d'un signal de commande de frein moteur (S3), une commande d'au moins un frein de roue (17) du véhicule remorque (3) a lieu même si le premier critère (K1) n'est pas rempli.

6. Procédé selon l'une des revendications précédentes, **caractérisé en ce que** même si le premier critère (K1) n'est pas rempli, un quatrième critère (K4) est vérifié, selon lequel une descente de côte (26) à vitesse de déplacement (v) constante est déterminée et au moins un frein de roue (17) du véhicule remorque (3) est commandé en fonction du quatrième critère (K4).

7. Procédé selon l'une des revendications précédentes, **caractérisé en ce qu'**une poussée du véhicule remorque (3) est déterminée sans participation de données ou de signaux du véhicule remorque (3).

8. Dispositif de commande de frein (6) pour un véhicule tracteur (2) d'une combinaison de véhicules (1), le dispositif de commande de frein (6) collectant des signaux de vitesse de rotation de roue (n_VA, n_HA) des roues des essieux (vHA) du véhicule tracteur (2) et se trouvant en liaison de données (S6) avec un dispositif de commande de frein de remorque (16),
le dispositif de commande de frein (6) vérifiant au moins un premier critère (K1), selon lequel il existe, au niveau de l'essieu moteur (HA) du véhicule tracteur (2), un patinage de roue freinant (s_HA) sans actionnement d'un frein de roue (17) de l'essieu moteur (HA) et, si le premier critère (K1) est rempli, délivrant un signal de demande de freinage (S6) en vue de délivrer au moins un signal de commande de frein de remorque (S5) à au moins un frein de roue (17) du véhicule remorque (3) en vue de freiner le véhicule remorque (3),
un critère d'exclusion (K2) étant vérifié avec une ou plusieurs conditions d'exclusion (K2a, K2b), les freins de roue (17) du véhicule remorque (3) n'étant pas commandés en présence d'au moins une condition d'exclusion (K2a, K2b),
**caractérisé en ce que**
la première condition d'exclusion (K2a) consiste à vérifier si une montée de côte (24) est présente,
les freins de roue (17) du véhicule remorque (3) n'étant pas commandés en présence d'une montée de côte (24), et/ou
**en ce que** la deuxième condition d'exclusion (K2b) consiste à vérifier si une régulation de la stabilité de conduite est active au niveau du véhicule tracteur (2) et les freins de roue (17) du véhicule remorque (3) n'étant pas commandés en présence d'une régulation de la stabilité de conduite au niveau du véhicule tracteur (2).

9. Combinaison de véhicules (1) comprenant un véhicule tracteur (2) et un véhicule remorque (3), le véhicule tracteur (2) comprenant un dispositif de commande de frein (6) selon la revendication 8 et/ou étant conçu pour mettre en œuvre un procédé selon l'une des revendications 1 à 7.
